# EUROPÄISCHE PATENTANMELDUNG

(11) **EP 1 524 382 A2**
(43) Veröffentlichungstag der Anmeldung: **20.04.2005**
(21) Anmeldenummer: 04024081.4
(22) Anmeldetag: 08.10.2004
(51) Int. Cl.: E04D 13/10

(54) **Befestigungsvorrichtung für ein Dachelement**

(30) Priorität: 15.10.2003 DE 20315867 U
(71) Anmelder: Solarstocc AG, 87471 Durach (DE)
(72) Erfinder: Waehrens, Jakob, 87435 Kempten (DE); Schmohl, Hans-Bernhard, 12689 Berlin (DE)
(74) Vertreter: Grünecker, Kinkeldey, Stockmair & Schwanhäusser Anwaltssozietät

(57) **Zusammenfassung**

Die Erfindung bezieht sich auf eine Befestigungsvorrichtung zur Verankerung eines Dachelements auf einer Dachunterkonstruktion, vorzugsweise auf der Lattung eines Pfannendaches, mit zumindest zwei Halteabschnitten, die mit der Dachunterkonstruktion, vorzugsweise mit zwei benachbarten, parallelen Dachlatten in Eingriff bringbar sind. Um ein solches austauschbares Dachelement einfach und sicher auf der Lattung eines Pfannendaches zu verankern, ist erfindungsgemäß vorgesehen, dass zumindest einer der Halteabschnitte gegenüber dem Dachelement bewegbar ist.

## Beschreibung

Die Erfindung betrifft eine Befestigungsvorrichtung zur Verankerung eines Dachelements auf einer Dachunterkonstruktion, vorzugsweise auf der Lattung eines Pfannendaches, mit zumindest zwei Halteabschnitten, die mit der Dachunterkonstruktion, vorzugsweise mit zwei benachbarten, parallelen Dachlatten in Eingriff bringbar sind.

Derartige Vorrichtungen sind aus dem Stand der Technik bekannt.

Häufig müssen Halterungen auf der Schräge eines Pfannendaches z. B. für Sonnenkollektoren oder Schneefänge angebracht werden. Gewöhnlich befestigt man dazu Halterungen am Unterbau eines Pfannendaches (sogenannte Sparren), die abschnittsweise unter den Dachpfannen (Dachziegeln) hervorstehen. Das Anbringen dieser Halterungen erfordert einen großen Montageaufwand und verursacht viel Lärm und Schmutz.

Pfannendächer werden vorwiegend in Skandinavien und Mitteleuropa gebaut. Entsprechende Halterungen für Sonnenkollektoren oder Schneefänge sind dabei extremen Belastungen, abhängig von verschiedenen Witterungseinflüssen, ausgesetzt. Eine Schneelast erzeugt z. B. hohe Druckkräfte, die über die Schneefanghalterung auf die Lattung eines Daches übertragen werden müssen. An den Halterungen werden die einwirkenden Kräfte gebündelt. Um diese Lasten von der Halterung entsprechend auf den Unterbau eines Pfannendaches übertragen zu können werden z.B. zusätzliche Dachlatten eingebaut. Bei einem bekannten Blechdachelement mit Schneefanghalterung sind auf der Unterseite zwei Halteabschnitte vorgesehen: Mit der oberen Halterung wird das Blechdachelement an einer oberen Dachlatte eingehängt. Der untere Halteabschnitt dient dazu, das Blechdachelement an einer hilfsweise eingezogenen Dachlatte abzustützen.

Der gewöhnliche Unterbau eines Pfannendaches besteht aus sogenannten Sparren, die einer Richtung senkrecht zum Dachgiebel angeordnet sind. Die sogenannten Dachlatten erstrecken sich in einer Richtung parallel zum Dachgiebel und sind in einem Abstand von ca. 20cm bis 40cm auf der Oberseite dieser Dachsparren angeordnet. Die Dachsparren sind in der Regel ca. einen Meter voneinander beabstandet. Zwischen zwei benachbarten Dachsparren sind ca. vier bis fünf Dachpfannen entlang der Dachlatten angeordnet. Um eine zusätzliche Dachlatte einzuziehen, müssen also sämtliche, zwischen zwei benachbarten Dachsparren angeordnete Dachpfannen entfernt werden. Dies ist verbunden mit großem Zeitaufwand und hohen Kosten, zudem entstehen durch das Fixieren der zusätzlichen Dachlatte auf den Sparren Lärm und Schmutz.

Der Erfindung liegt daher die Aufgabe zugrunde, ein austauschbares Dachelement einfach sicher auf der Lattung eines Pfannendaches zu verankern. Nach dem Modularitätsprinzip soll dabei jeweils eine Dachpfanne (Dachziegel) gegen ein Dachelement ausgetauscht werden. Das Dachelement soll so an der Lattung eines Pfannendaches verankert werden, dass witterungsbedingte Zug- und Druckkräfte beherrscht werden. Ferner sollen die austauschbaren Dachelemente mit geringem Montageaufwand bei möglichst geringer Erzeugung von Lärm und Schmutz eingebaut werden können.

Die Aufgabe der Erfindung wird gelöst durch eine Befestigungsvorrichtung für ein Dachelement gemäß dem Oberbegriff des ersten Anspruchs, dadurch gekennzeichnet, dass zumindest einer der Halteabschnitte gegenüber dem Dachelement bewegbar ist.

So kann die Befestigungsvorrichtung unterschiedlichen Dachunterkonstruktionen (z.B. verschiedene Dachlattenabstände) flexibel angepasst werden, und das Dachelement bei geringem Montageaufwand auf der Dachunterkonstruktion verankern. Der Abstand der Dachlatten ist in der Regel nicht genormt. Durch den beweglichen Halteabschnitt kann jeder mögliche Abstand (in der Regel zwischen 20cm und 40 cm) zwischen zwei benachbarten Dachlatten überbrückt werden. Dazu wird das austauschbare wie gewöhnliche Dachpfannen (Dachziegel) in der Dachlattung eingehängt. Durch den bewegbaren Halteabschnitt kann das Dachelement an einem weiteren Teil der Dachlattung fixiert und abgestützt werden. Die Halteabschnitte werden dabei bevorzugt mit Dachlatten in Eingriff gebracht und stützen sich von diesen ab. Somit ist gewährleistet, dass das Dachelement im Verriegelungszustand der Befestigungsvorrichtung immer an zwei Punkten fixiert werden kann. Dadurch können erhebliche, auf das Dachelement einwirkende, Zug- und Druckkräfte beherrscht werden. Die Montage ist gegenüber herkömmlichen Methoden für die Befestigung austauschbarer Dachelement außerordentlich zeitsparend. Zudem fallen weder Lärm noch Schmutz an, da außer der Verschiebung des zweiten beweglichen Halteabschnitts zur Verankerung mit der Dachlattung keine weiteren Bearbeitungsschritte notwendig sind.

In einer bevorzugten Ausführungsform sind beide Halteabschnitte gegenüber dem Dachelement bewegbar. Durch einen zweiten beweglichen Halteabschnitt kann die Befestigungsvorrichtung noch flexibler an die Dachunterkonstruktion angepasst und an selbiger verankert werden.

Zudem erweist es sich als vorteilhaft, wenn die Halteabschnitte auf einer Geraden, im Wesentlichen parallel zur Erstreckungsebene des Dachelements, bewegbar sind. Die Halteabschnitte können somit jeweils mit einer einfachen linearen Bewegung mit der Dachunterkonstruktion in Eingriff gebracht werden. Dies ist besonders günstig beim Verankern des Dachelements auf den parallelen Dachlatten eines Pfannendaches.

Überdies erweist es sich als günstig, wenn ein weiterer, nicht beweglicher Halteabschnitt vorgesehen ist. An diesem Halteabschnitt kann das Dachelement wie eine gewöhnliche Dachpfanne (Dachziegel) an einer oberen Dachlatte eingehängt, und an seinem Bestimmungsort positioniert werden. Dies erleichtert den Montagevorgang und das Verankern der Halteabschnitte auf der Dachunterkonstruktion erheblich.

Auch verringert es den Montageaufwand für das Verankern des Dachelements auf der Dachunterkonstruktion weiter, wenn zumindest ein Halteabschnitt zwischen einer Entriegelungsstellung, in der zumindest ein Halteabschnitt nicht mit der Dachunterkonstruktion in Eingriff steht, und einer Verriegelungsstellung, in der beide Halteabschnitte mit der Dachunterkonstruktion in Eingriff stehen, bewegt werden kann, wobei sich die Halteabschnitte in der Verriegelungsstellung in unterschiedlichen Richtungen von der Dachunterkonstruktion abstützen.

Um die Dachlast auf besonders vorteilhafte Art und Weise auf die Dachunterkonstruktion zu übertragen erweist es sich als hilfreich, wenn sich die Halteabschnitte in der Verriegelungsstellung in entgegengesetzten Richtungen im Wesentlichen senkrecht von zwei benachbarten Dachlatten abstützen.

Als besonders günstig erweist sich eine Ausführungsform, bei der die Halteabschnitte in einer Führungsschiene geführt werden. Über die Führungsschiene können große, auf das Dachelement einwirkende Lasten auf die Dachunterkonstruktion übertragen werden wobei die Halteabschnitte für die Montage in der Führungsschiene gleichzeitig bewegbar sind.

Besonders geeignet für das Übertragen großen Zugkräfte vom Dachelement auf die Dachunterkonstruktion ist eine Befestigungsvorrichtung, bei der jeder Halteabschnitt wenigstens ein Spannstück aufweist, das eine Dachlatte im Verriegelungszustand zumindest teilweise umgreift. Dadurch kann verhindert werden, dass ein Dachelement z.B. durch stake Winde angehoben und aus der Verankerung gerissen wird.

Auch erweist es sich als besonders günstig, wenn zumindest zwei Halteabschnitte durch ein Verbindungselement miteinander verbunden sind und als bewegliche Einheit gemeinsam mit dem Verbindungselement bewegt werden können, wobei mindestens ein Halteabschnitt gegenüber dem Verbindungselement bewegbar ist. So können die zwei Halteabschnitte mit gleichbleibendem Abstand gemeinsam bewegt und zusätzlich voneinander beabstandet werden. So ist die Verankerung eines Dachelements auf einer Dachunterkonstruktion mit wenigen Handgriffen bzw. Arbeitsschritten möglich.

Dazu eignet es sich seht gut, wenn das Verbindungselement eine Gewindestange ist und ein Halteabschnitt drehbar an der Gewindestange angebracht ist, wobei der andere Halteabschnitt über ein Gegengewinde mit der Gewindestange im Eingriff steht und sich bei einer Drehung der Gewindestange entlang der Gewindestange in axialer Richtung bewegt. Eine Bewegung der Gewindestange in axialer Richtung bewegt zwei in einer Führungsschiene angeordnete Halteabschnitte gemeinsam, ein Drehen der Gewindestange um die Stangenachse führt eine Bewegung des einen Halteabschnitts gegenüber dem anderen Halteabschnitt herbei. Der Monteur kann somit durch Bewegen der Gewindestange einen Abschnitt, z. B. an einem Ende der Gewindestange, in Eingriff mit einer oberen Dachlatte bringen und durch Drehen der Gewindestange den unteren Halteabschnitt in Eingriff mit der unteren Dachlatte bringen, während der obere Halteabschnitt in gleicher Position verweilt.

Für den Einsatz einer Gewindestange ist es besonders hilfreich, wenn die Halteabschnitte gegenüber dem Dachelement drehfest gelagert sind. Durch eine Drehung der Gewindestange können die mit der Gewindestange verbundenen Halteabschnitte voneinander beabstandet werden.

Zudem erweist es sich als hilfreich, wenn die Halteabschnitte Spannschlitten sind, die in der Führungsschiene nach "Feder-Nut-Prinzip" geführt werden. Bei dieser Ausführungsform ist die Kraftübertragung zwischen Dachelement und Dachunterkonstruktion besonders gut.

Für das Anbringen beliebigen Dachzubehörs auf der Dachoberseite empfiehlt sich eine Ausführungsform, bei der das Dachelement auf der der Dachunterkonstruktion abgewandten Oberseite eine Montagevorrichtung aufweist.

Als Montagevorrichtung ist ein Montagewinkel für die Aufnahme von Dachzubehör, vorzugsweise eines Photovoltaik-Montagesystems besonders gut geeignet. Ein Montagewinkel verfügt über verschiedene horizontale und vertikale Verschraubungsmöglichkeiten zur Befestigung handelsüblichen Dachzubehörs, wodurch sich eine Vielzahl von Anwendungsmöglichkeiten ergibt (z.B. Montage von Sonnenkollektoren, Schneefängen, etc).

Die von einer Dachapparatur auf das Dachelement einwirkende Last wird auf besonders vorteilhafte Art und Weise auf die Dachunterkonstruktion übertragen, wenn die Befestigungsvorrichtung fest mit dem Blechdachelement und der Montagevorrichtung verbunden ist.

Nach einem weiteren Aspekt der Erfindung wird die obige Aufgabe gelöst durch ein Dachelement mit einer Befestigungsvorrichtung nach einem der Ansprüche 1-15. Ein derartiges Dachelement lässt sich einfach montieren und fest mit einer beliebigen Dachunterkonstruktion verankern, so dass das Dachelement imstande ist große z.B. witterungsbedingte Dachlasten auf die Dachunterkonstruktion zu übertragen.

Nachstehend werden die Merkmale und die Funktionsweise der Erfindung anhand eines Ausführungsbeispiels mit Bezug auf die Figuren beschrieben.
- Fig. 1:: Seitenansicht eines Dachelements mit Montage- und Befestigungsvorrichtung.
- Fig. 2:: Schnitt durch eine Befestigungsvorrichtung mit Dachunterkonstruktion
- Fig. 3:: Profil einer Führungsschiene
- Fig. 4:: Profil eines Spannschlittens
- Fig. 5:: Profil eines Spannschlittens im Eingriff mit einer Führungsschiene
- Fig. 6:: Profil einer Führungsschiene (2)
- Fig. 7:: Profil eines Spannschlittens (2)
- Fig. 8:: Profil eines Spannschlittens im Eingriff mit einer Führungsschiene (2)
- Fig. 9:: Einbausituationen im Ziegelverbund unterschiedlichen Pfannentypen

### Beschreibung:

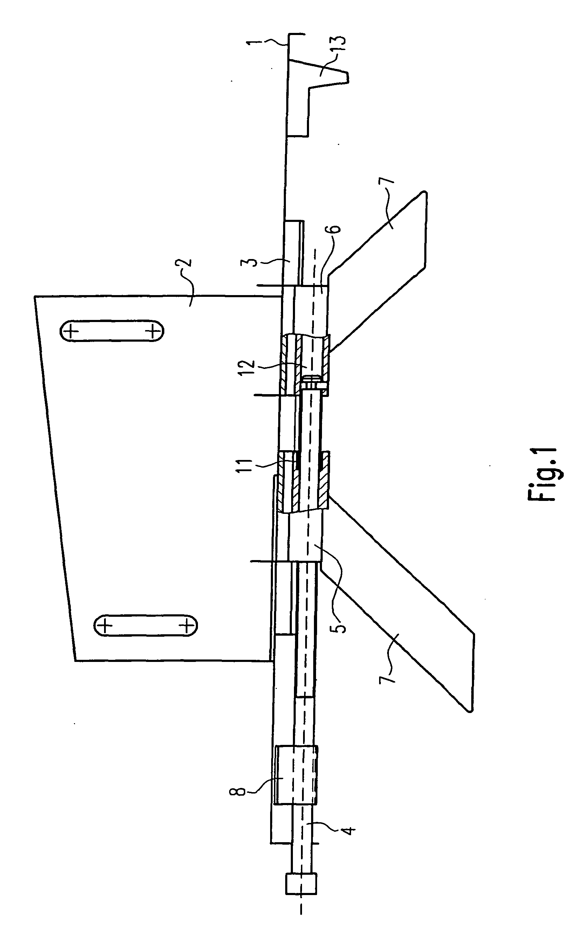

Die Figur 1 zeigt eine Gesamtansicht einer erfindungsgemäßen Befestigungsvorrichtung für ein Dachelement. Das Dachelement besteht aus einem Standard - Blechdachstein 1 (z.B. den Typen Flachdachpfanne, Frankfurter Pfanne, Falzziegel, usw.), einem Montagewinkel 2 für die Aufnahme beliebigen Dachzubehörs wie z.B. eines PV- Montagesystems und einer Befestigungseinrichtung zur Verankerung des Blechdachsteins mit der Dachunterkonstruktion. Das Dachelement einen rechteckigen Grundriss mit einer Längs- und einer Breitseite. Der ebenen Abschnitt des Dachelements 1, an welchem der Montagewinkel 2 und die Führungsschiene 3 angebracht sind, wird fortan als Hauptebene des Dachelements 1 bezeichnet. In der beschriebenen Ausführungsform wird das Dachelement 1 über die Befestigungsvorrichtung an den Dachlatten 10 einer gewöhnlichen Dachunterkonstruktion, bestehend aus Sparren und Latten, verankert.

Der Montagewinkel 2 befindet sich auf der der Dachunterkonstruktion abgewandten Oberseite des Dachelements 1 und ist über eine nicht lösbare Verbindung mit dem Dachelement 1 und der Führungsschiene 3, welche unterhalb des Blechdachsteins angeordnet ist, verbunden. Der Montagewinkel 2 verfügt über verschiedene horizontale und vertikale Verschraubungsmöglichkeiten zur Befestigung handelsüblichen Dachzubehörs wie z.B. Photovoltaik - Montagesysteme.

Der Montagewinkel 2 ist aus Aluminium, Kunststoff oder Stahl gefertigt und besteht vorzugsweise aus dem gleichen Werkstoff wie die Befestigungsvorrichtung und das Dachelement (zur Vermeidung von Materialkorrosion).

Aus fertigungstechnischen Gründen ist der Montagewinkel 2 vorzugsweise aus einem ebenen Grundmaterial geformt. An dem zur Befestigung auf dem Dachelement 1 bestimmen Ende des Montagewinkels 2 sind Auflageabschnitte freigeschnitten und im Wesentlichen rechtwinklig zu beiden Seiten abgebogen. Diese flanschartigen Auflageabschnitte liegen im montierten Zustand eben auf einer entsprechenden Auflagefläche des Dachelements auf. Beide Auflageabschnitte weisen Durchgangsbohrungen auf, die jeweils auf entsprechende Durchgangsbohrungen des Dachelements 1 und der Führungsschiene 3 abgestimmt sind. Der Montagewinkel 2 ist in Längsrichtung des Dachelements 1 an dessen Oberseite angeordnet und fest mit dem Dachelement 1 und der Führungsschiene 3 verschraubt oder anderweitig fest verbunden (z.B. durch Nieten) und steht im Wesentlichen senkrecht zur Ebene des Dachelements 1 hervor.

Auf der Unterseite des Dachelements ist die eigentliche Befestigungsvorrichtung angebracht. Die Befestigungsvorrichtung als Bindeglied zwischen Dachelement 1 und Dachunterkonstruktion 10 besteht aus einer Führungsschiene 3, zwei Halteabschnitten 5,6 und einer Gewindestange 4 mit Schraubenkopf und/oder Innensechskant-Inbus. In der Führungsschiene (bzw. Montageschiene) 3 werden die Halteabschnitte 5,6 nach dem "Feder-Nut-Prinzip" im Wesentlichen in Längsrichtung des Dachelements 1, parallel zu der Hauptebene des Dachelements 1 geführt und drehfest gelagert.

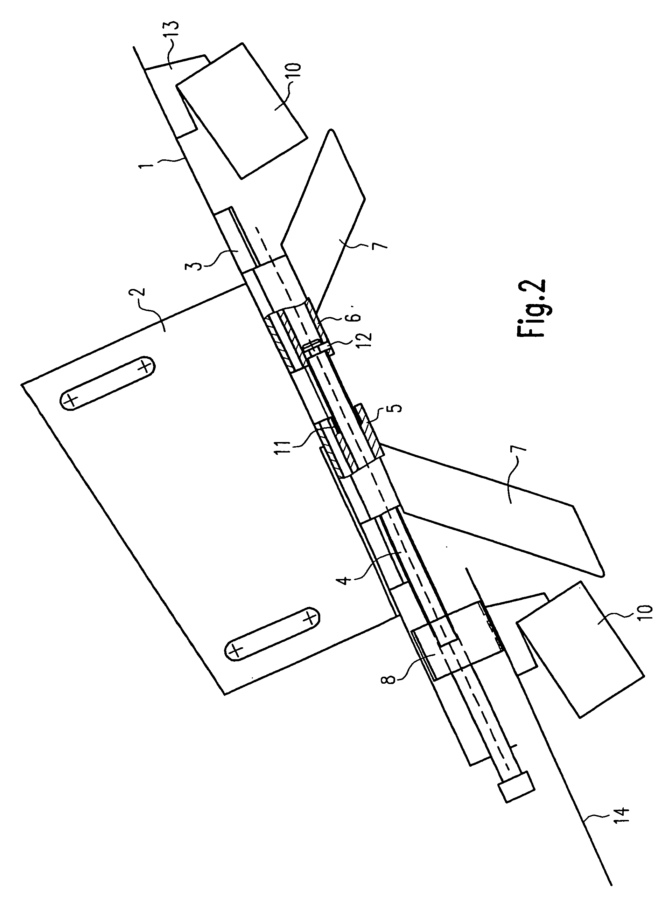

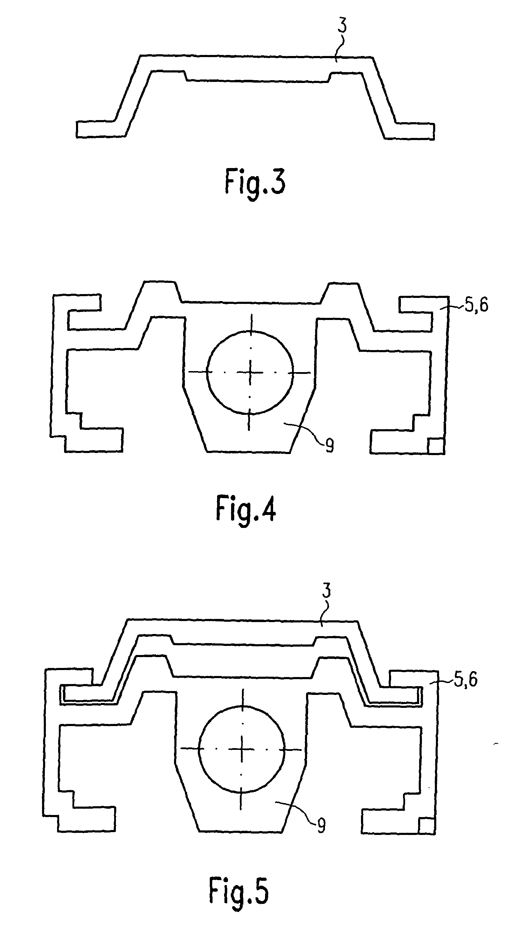

Die Führungsschiene 3 ist - ebenso wie der Montagewinkel 2 - in Längsrichtung des Dachelements 1 ausgerichtet und hat eine Breite von vorzugsweise ca. 5 cm. In den Figuren 3-8 sind unterschiedliche Varianten der Führungsschiene 3 und der Halteabschnitte 5,6 bzw. des Eingriffs zwischen der Führungsschiene 3 und den Halteabschnitten 5,6 gezeigt. Die Gewindestange 4 liegt im Wesentlichen mittig innerhalb der Führungsschiene 3 und ragt durch eine Öffnung in einer abgebogenen Kante einem unteren Ende des Blechdachelements 1 stirnseitig heraus, wie in Figuren 1 und 2 zu sehen ist.

An einem längsseitigen Ende der Dachelements 1 ist ein oberes Auflager 13 vorgesehen, das im Wesentlichen senkrecht zur Unterseite des Dachelements 1 hervorsteht. Dieses obere Auflager 13 dient dazu, das gesamte Dachelement 1 analog zu einem gewöhnlichen Dachziegel an einer oberen Dachlatte 10a einzuhängen und an seinem Bestimmungsort zu positionieren. Alternativ kann das obere Auflager 13 an einem längsseitigen Ende der Führungsschiene 3 angeformt sein und gleichzeitig als Anschlag dienen, um zu verhindern, dass die Halteabschnitte 5,6 aus der Führungsschiene 3 gleiten.

In der gezeigten Ausführungsform bestehen beide Halteabschnitte jeweils aus einem Spannschlitten 5,6 und einem Spannstück 7. Bevorzugte Materialien für die Herstellung der Führungsschiene 3 und der Spannschlitten 5,6 sind Aluminium, Kunststoff oder Stahl. Die Spannstücke 7 unterschiedlicher Formgebung sind vorzugsweise ebenfalls aus einem Aluminium-, Kunststoff- oder Stahlprofil gefertigt und mit den Spannschlitten 5,6 verschweißt oder anderweitig fest verbunden.

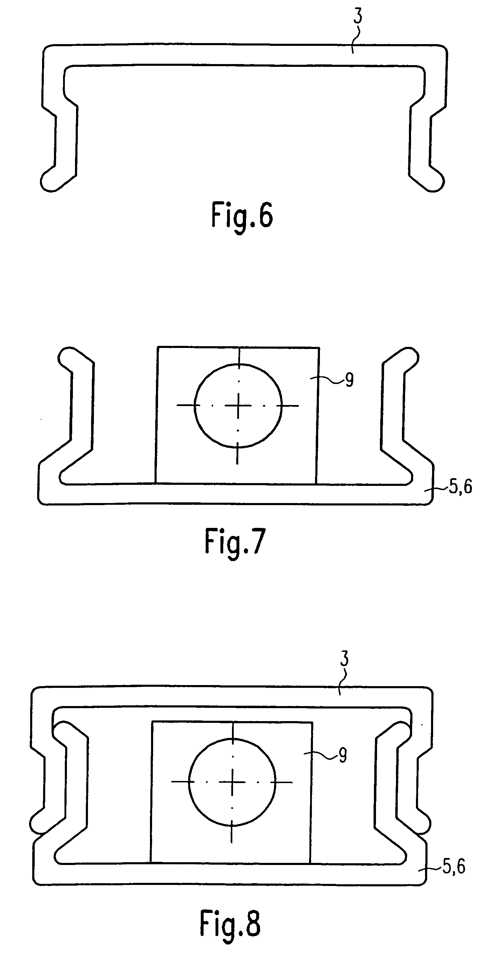

In der beschriebenen Ausführungsform sind die Spannschlitten 5,6 im Wesentlichen aus einem ebenen Blechstück geformt und haben nahezu einen identischen Aufbau: In den Figuren 3-8 ist zu sehen, wie die Seitenteile des Spannschlittens genau auf das Profil der Führungsschiene abgestimmt sind. Die Figuren 3-5 zeigen eine mögliche Ausführungsform der Führungsschiene 3 und der Spannschlitten 5,6: An der Unterseite der Spannschlitten 5,6 ist dazu eine Doppel-Nut vorgesehen, mit der die Seitenteile der Führungsschiene 3 im Eingriff steht. In Figuren 6-8 wird ein anderes Ausführungsbeispiel der Führungsschiene 3 und der Spannschlitten 5,6 gezeigt, bei der die parallelen Seitenteile der Spannschlitten mit den parallelen Seitenteilen der Führungsschiene im Eingriff stehen. Die Seitenteile der Spannschlitten 5,6 haben dabei in etwa den gleichen Abstand wie die parallelen Seitenteile der Führungsschiene 3, so dass die Seitenteile der Schlitten 5,6 im montierten Zustand dabei gegen die Innenseite der Seitenteile der Führungsschiene 3 drücken. Die Spannschlitten 5,6 werden in der Führungsschiene 3 durch Verklemmung seiner Seitenteile gegenüber den Seitenteilen der Führungsschiene 3 in Position gehalten. Eine zusätzliche Reibungskraft wird dadurch erzeugt, dass die Profile der Führungsschiene 3 und die der Spannschlitten 5,6 aufeinander abgestimmt sind.

Mittig ist an jedem Spannschlitten 5,6 ein Lagerabschnitt 9 vorgesehen. Dieser Lagerabschnitt 9 ist vorzugsweise aus dem Blechstück des Spannschlittens 5,6 freigeschnitten und zurechtgebogen, so dass er sich im Wesentlichen senkrecht zur Hauptebene des Blechstücks erstreckt. Im montierten Zustand des Spannschlittens 5,6 ragt der Lagerabschnitt 9 in den Zwischenraum zwischen den Seitenwänden der Führungsschiene 3. Über den Lagerabschnitt 9 befinden sich beide Spannschlitten 5,6 mit der Gewindestange 4 im Eingriff. Die Lagerabschnitte 9 beider Spannschlitten 5,6 sind jedoch unterschiedlich gestaltet: Der Spannschlitten 5 verfügt über einen Lagerabschnitt 9 mit einer Gewindebüchse 11, Spannschlitten 6 über einen Lagerabschnitt 9 mit einem Sackloch 12. Die Gewindestange 4 verbindet die Lagerabschnitte 9 der beiden Schlitten 5,6 zu einer beweglichen Schlitteneinheit, die auf der Führungsschiene 3 nach dem "Feder-Nut-Prinzip" geführt wird. Dadurch sind die Spannschlitten 5,6 gegenüber dem Dachelement 1 drehfest gelagert. Über das Sackloch 12 und einen Kerbstift ist der Lagerabschnitt 9 des Spannschlittens 5 drehbar mit der Gewindestange 4 verbunden, während die Gewindebüchse 11 im Lagerabschnitt 9 des Spannschlittens 6 mit der Gewindestange 4 in Eingriff steht und sich bei der Drehung der Gewindestange 4 entlang derselben bewegt. Die Gewindestange 4 weist ein Gewinde M8 oder M10 auf. Das Innengewinde in der Gewindebüchse 12 ist ein entsprechendes Gegengewinde zu der Gewindestange 4.

Das Spannstück 7 besteht aus einem gebogenen Blechteil mit zwei Seitenteilen, die gegenüber der Hauptebene des Dachelements 1 einen Winkel von ca. 45° beschreiben. Im montierten Zustand befinden sich beide Spannschlitten 5,6 in der Führungsschiene 3. Die Enden der Spannstücke 7 beider Spannschlitten 5,6 zeigen voneinander weg. Beide Spannschlitten 5,6 sind mit einem Spannstück 7 unterschiedlicher Auslegerlängen ausgestattet, die die Verankerung des Blechdachsteins mit der Dachunterkonstruktion gewährleisten. In Figuren 1 und ist zu sehen, dass der Ausleger des Spannstücks 7 am Spannschlitten 5 länger ist als der Ausleger des Spannstücks 7 am Spannschlitten 6. Das Spannstück 7 des Schlittens 6 ist zur Anlage an die obere (sparrenaufwärts liegende) Dachlatte 10a bestimmt, während das Spannstück 7 des Schlittens 5 zur Anlage an die untere (sparrenabwärts liegende) Dachlatte 10b bestimmt ist. Mit dem oberen Auflager 13 ist das Dachelement 1 an der oberen Dachlatte 10a eingehängt. Das Auslegerende des Spannstücks 7 am Spannschlitten 6 sollte ca. 45mm unterhalb des Spannschlittens 6 liegen. So kann die obere Dachlatte 10a im Verriegelungszustand zumindest teilweise vom Spannstück 7 des Schlittens 6 umgriffen werden. Am unteren längsseitigen Ende liegt das Dachelement 1 mit dem unteren Auflager 8 eben auf der darunter (sparrenabwärts) liegenden Dachpfanne 14 auf (Figur 2). Das untere Auflager 8 liegt also nicht unmittelbar auf der unteren Dachlatte 10b auf. Entsprechend der Form des jeweiligen Dachelements (bzw. der jeweiligen Dachpfanne) ist das untere Auflager 8 gestaltet um eine ebene Auflage zu gewährleisten. Durch das untere Auflager 8 ist der Abstand der Hauptebene des Dachelements 1 von der unteren Dachlatte 10b größer als von der oberen Dachlatte 10a. Folglich muss das Auslegerende des Spannstücks 7 am Schlitten 5 weiter unterhalb (ca. 75mm) des Spannschlittens 5 liegen. Die Spannstücke 7 sind jeweils an der der Führungsschiene abgewandten Seite des Spannschlittens festgeschweißt. In Figur 2 ist zu sehen, wie das Dachelement im Verbund mit einer darunter liegenden Dachpfanne angeordnet ist.

Nachstehend wird die Funktionsweise der Erfindung anhand des vorliegenden Ausführungsbeispieles näher erläutert.

Um eine auszutauschende Dachpfanne von der Lattung eines Pfannendaches zu entfemen, muss der entsprechende Monteur die sparrenaufwärts liegende Dachpfanne anheben und die auszutauschende Dachpfanne von der entsprechenden Dachplatte aushängen. Die vorliegende Erfindung betrifft die Ersatzdachpfanne (bzw. des Dachelements), die nun anstelle der auszutauschenden Dachpfanne tritt. Das Einsetzen des Dachelements erfolgt hierbei analog zu einem normalen Beton- oder Tonziegel. Zunächst wird das Ersatzdachelement mit dem oberen Auflager 13 in der nächstliegenden, oberen Dachlatte 10a eingehängt. Dazu muss die darüber (=sparrenaufwärts) liegende Dachpfanne angehoben werden.

Die bewegliche Schlitteneinheit 4,5,6, bestehend aus den beiden Spannschlitten 5,6 und der Gewindestange 4, wird so positioniert, dass die äußeren Enden des Spannschlittens 5,6 bzw. der Spannstücke 7 zwischen den parallel verlaufenden Dachlatten 10 eingefügt werden können. Um die Schlitteneinheit 4,5,6 in Längsrichtung in der Führungsschiene 3 zu bewegen, zieht oder drückt der Monteur an der Gewindestange 4, die stirnseitig über das untere (sparrenabwärts liegende) Ende des Dachelements 1 hervorsteht.

Nach erfolgter Platzierung des Dachelements 1 im umgebenden Ziegelverbund wird die am unteren Ende des Dachelements 1 stirnseitig herausragende Gewindestange 4 mit denen an ihr befestigten Spannschlitten 5,6 in Richtung der oberen Dachlatte 10a, auf dem das Dachelement 1 aufliegt und eingehängt ist, bis zum Anschlag des oberen Spannstücks 7 geschoben. Das Spannstück 7 des oberen Schlittens 6 umgreift die obere Dachlatte 10a teilweise um sich an darauf zu verankern.

Mit Hilfe eines handelsüblichen Sechskantschlüssels oder Akku-Schraubers mit Inbus-Teileinsatz wird durch Rechtsbewegung der Gewindestange 4 der untere Spannschlitten 5 mit seinem Spannstück 7 gegen die untere Dachlatte 10b gefahren. Die Konstruktion der Spannstücke 7 gewährleistet einen festen und dauerhaften Sitz des Dachelements 1, unabhängig von dem vorhandenen Dachlattentyp (30x50 oder 40x60mm). Befinden sich die Spannschlitten 5,6 in Verriegelungsstellung, so schließt der Kopf der Gewindestange 4 vorzugsweise mit der Stirnseite des Dachelements 1 ab. Um Korrosion der Gewindestange 4 bzw. des Schraubenkopfes der Gewindestange 4 zu vermeiden, sollte der Kopf der Gewindestange 4 nicht über die Stirnseite des Dachelements 1 hervorstehen, d.h. die Gewindestange 4 sollte vollständig unterhalb des Dachelements 1 liegen.

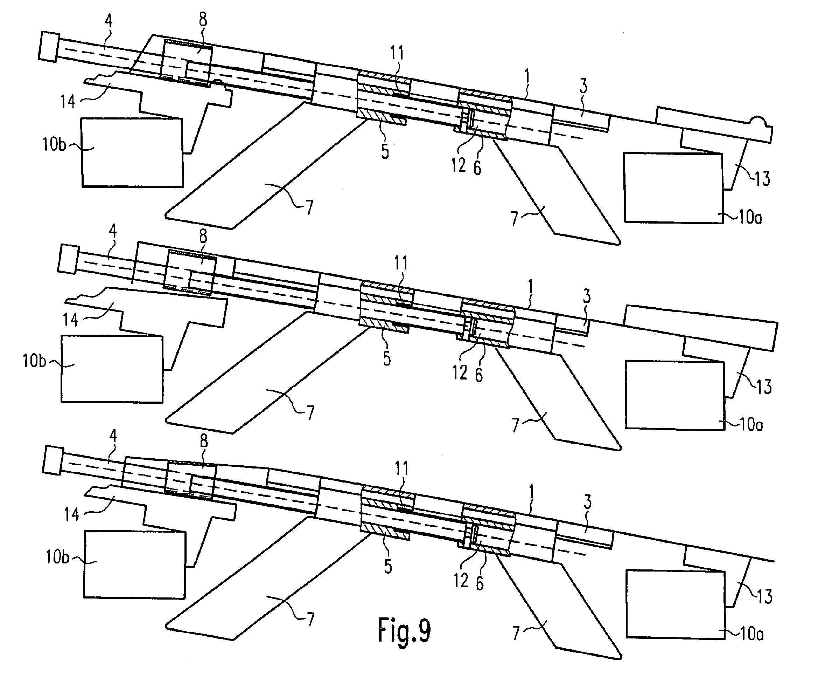

So ist es auch denkbar, dass der Kopf der Gewindestange 4 im Verriegelungszustand der Befestigungsvorrichtung z.B. ca. 1cm von der Stirnseite des Dachelements beabstandet ist. Auflager 8 verschiedenster Formgebung (auf Blechdachsteintyp abgestimmt) auf der Unterseite des Dachelements 1 leiten die Tragkräfte des Dachzubehörs z.B. des PV- Montagesystems sicher auf die untere Dachlatte 10b ab, ohne den unter dem Dachelement 1 befindlichen Beton- oder Tonziegel 14 auf Bruch zu beanspruchen. Figur 9 zeigt ein erfindungsgemäßes Dachelement in einer Einbausituation im Ziegelverbund mit unterschiedlichen Dachpfannentypen.

Dadurch ergibt sich das folgende Montageverfahren:

Verfahren zur Befestigung eines Dachelements (1) auf einer Dachunterkonstruktion, vorzugsweise auf der Lattung eines Pfannendaches, mit einer Befestigungsvorrichtung bestehend aus zumindest zwei Halteabschnitten (5,6), wobei das Dachelement (1) in einer Entriegelungsstellung der Befestigungsvorrichtung auf der Dachunterkonstruktion positioniert wird, und daraufhin, wenn das Dachelement (1) auf der Dachunterkonstruktion positioniert ist, ein Halteabschnitt in eine Verriegelungsstellung bewegt wird, so dass beide Halteabschnitte (5,6) mit der Dachunterkonstruktion (10a,b) in Eingriff stehen.

## Patentansprüche

1. Befestigungsvorrichtung zur Verankerung eines Dachelements (1) auf einer Dachunterkonstruktion, vorzugsweise auf der Lattung eines Pfannendaches, mit zumindest zwei Halteabschnitten (5,6), die mit der Dachunterkonstruktion, vorzugsweise mit zwei benachbarten, parallelen Dachlatten (10) in Eingriff bringbar sind, **gekennzeichnet dadurch, dass** zumindest einer der Halteabschnitte (5,6) gegenüber dem Dachelement (1) bewegbar ist.

2. Befestigungsvorrichtung nach Anspruch 1, **gekennzeichnet dadurch, dass** zwei Halteabschnitte (5,6) gegenüber dem Dachelement (1) bewegbar sind.

3. Befestigungsvorrichtung nach zumindest einem der vorhergehenden Ansprüche, **gekennzeichnet dadurch, dass** die Halteabschnitte (5,6) auf einer Geraden, im Wesentlichen parallel zur Erstreckungsebene des Dachelements (1), bewegbar sind.

4. Befestigungsvorrichtung nach zumindest einem der vorhergehenden Ansprüche, **gekennzeichnet durch** einen weiteren, nicht bewegbaren Halteabschnitt (13).

5. Befestigungsvorrichtung nach zumindest einem der vorhergehenden Ansprüche, **gekennzeichnet dadurch, dass** zumindest ein Halteabschnitt zwischen einer Entriegelungsstellung, in der zumindest ein Halteabschnitt nicht mit der Dachunterkonstruktion (10a,b) in Eingriff steht, und einer Verriegelungsstellung, in der beide Halteabschnitte (5,6) mit der Dachunterkonstruktion (10a,b) in Eingriff stehen, bewegt werden kann, wobei sich die Halteabschnitte (5,6) in der Verriegelungsstellung in unterschiedlichen Richtungen von der Dachunterkonstruktion (10a,b) abstützen.

6. Befestigungsvorrichtung nach zumindest einem der vorhergehenden Ansprüche, **gekennzeichnet dadurch, dass** sich die Halteabschnitte (5,6) in der Verriegelungsstellung in entgegengesetzten Richtungen im Wesentlichen senkrecht von zwei benachbarten Dachlatten (10a,b) abstützen.

7. Befestigungsvorrichtung nach zumindest einem der vorhergehenden Ansprüche, **gekennzeichnet dadurch, dass** die Halteabschnitte (5,6) in einer Führungsschiene (3), die fest mit dem Dachelement verbunden ist, geführt werden.

8. Befestigungsvorrichtung nach zumindest einem der vorhergehenden Ansprüche, **gekennzeichnet dadurch, dass** jeder Halteabschnitt (5,6) wenigstens ein Spannstück (7) aufweist, das eine Dachlatte (10a,b) im Verriegelungszustand zumindest teilweise umgreift.

9. Befestigungsvorrichtung nach zumindest einem der vorhergehenden Ansprüche, **gekennzeichnet dadurch, dass** zumindest zwei Halteabschnitte (5,6) durch ein Verbindungselement (4) miteinander verbunden sind und als bewegliche Einheit (4,5,6) gemeinsam mit dem Verbindungselement (4) bewegt werden können, wobei mindestens ein Halteabschnitt (5) gegenüber dem Verbindungselement bewegbar ist.

10. Befestigungsvorrichtung nach zumindest einem der vorhergehenden Ansprüche, **gekennzeichnet dadurch, dass** das Verbindungselement eine Gewindestange (4) ist und ein Halteabschnitt (6) drehbar an der Gewindestange (4) angebracht ist, wobei der andere Halteabschnitt (5) über ein Gegengewinde mit der Gewindestange (4) im Eingriff steht und sich bei einer Drehung der Gewindestange (4) in axialer Richtung entlang der Gewindestange (4) bewegt.

11. Befestigungsvorrichtung nach zumindest einem der vorhergehenden Ansprüche, **gekennzeichnet dadurch, dass** die Halteabschnitte (5,6) gegenüber dem Dachelement (1) drehfest gelagert sind.

12. Befestigungsvorrichtung nach zumindest einem der vorhergehenden Ansprüche, **gekennzeichnet dadurch, dass** die Halteabschnitte Spannschlitten (5,6) sind, die auf der Führungsschiene (3) nach "Feder-Nut-Prinzip" geführt werden.

13. Befestigungsvorrichtung nach zumindest einem der vorhergehenden Ansprüche, **gekennzeichnet dadurch, dass** das Dachelement (1) auf der der Dachunterkonstruktion (10a,b) abgewandten Oberseite eine Montagevorrichtung (2) aufweist.

14. Befestigungsvorrichtung nach zumindest einem der vorhergehenden Ansprüche, **gekennzeichnet dadurch, dass** die Montagevorrichtung ein Montagewinkel (2) für die Aufnahme von Dachzubehör, vorzugsweise eines Photovoltaik-Montagesystems ist.

15. Befestigungsvorrichtung nach zumindest einem der vorhergehenden Ansprüche, **gekennzeichnet dadurch, dass** die Befestigungsvorrichtung fest mit dem Dachelement (1) und der Montagevorrichtung (2) verbunden ist.

16. Dachelement mit einer Befestigungsvorrichtung nach zumindest einem der vorhergehenden Ansprüche.
